# EUROPÄISCHE PATENTSCHRIFT

(11) **EP 2 646 270 B1**
(45) Veröffentlichungstag und Bekanntmachung des Hinweises auf die Patenterteilung: **18.03.2015**
(21) Anmeldenummer: 11790767.5
(22) Anmeldetag: 28.11.2011
(51) Int. Cl.: B60K 15/03, B60K 15/04

(54) **EINSATZ FÜR EINEN EINFÜLLSTUTZEN EINES HARNSTOFFBEHÄLTERS**
INSERT FOR A FILLER NECK OF A UREA CONTAINER
INSERT POUR UNE TUBULURE DE REMPLISSAGE D'UN RÉSERVOIR D'URÉE

(30) Priorität: 04.12.2010 DE 202010016319 U
(43) Veröffentlichungstag der Anmeldung: 09.10.2013
(73) Patentinhaber: Reutter GmbH, 71397 Leutenbach (DE)
(72) Erfinder: BEHNAMRAD, Kazem, 71364 Winnenden (DE)
(74) Vertreter: DREISS Patentanwälte PartG mbB
(86) Internationale Anmeldenummer: PCT/EP2011/071103
(87) Internationale Veröffentlichungsnummer: WO 2012/072529

(56) Entgegenhaltungen:
- EP-A1- 1 586 478
- EP-A2- 1 502 794
- DE-A1-102008 049 150
- DE-U1-202007 018 247
- DE-U1-202009 001 182

## Beschreibung

Die vorliegende Erfindung bezieht sich auf einen Einsatz für einen Einfüllstutzen eines Harnstoffbehälters in dieselbetriebenen Kraftfahrzeugen, vorzugsweise Lastkraftwagen entsprechend dem Oberbegriff des Anspruchs 1.

Um sicherzustellen, dass kein Harnstoff in Kraftstofftanks gefüllt werden kann, sind Zapfpistolen für Harnstoff mit einem Sicherungsventil ausgestattet, das über einen Ringmagneten im Einfüllstutzen freischaltet wird. Diese Anordnung hat sich bei Lastkraftwagen bewährt.

Aus der gattungsbildenden EP 1 502 794 A2 ist eine Vorrichtung zur Vermeidung von Fehlbetankungen bekannt bei der ein ringförmiger Permanentmagnet eingesetzt wird. Der Permanentmagnet befindet in einem Raum, der von einem Deckel und einer Dichtung abgeschlossen wird.

Aus der DE 20 2009 001 182 U1 ist eine Vorrichtung zur Vermeidung von Fehlbetankungen bekannt bei der ein ringförmiger Permanentmagnet eingesetzt wird. Konstruktive Details der Unterbringung des Permanenmagneten und dessen Abschirmung vor der aggresiven Harnstoff-Wasser-Lösung sind nicht beschrieben.

Aufgabe der vorliegenden Erfindung ist es, zur Kostenreduzierung bei solchen Einfüllstutzen, die mit dem Harnstoffbehälter fest verbunden sind, einen zum beispielsweise nachträglichen Einbau in den Einfüllstutzen geeigneten Einsatz zu schaffen, der einen einfachen Aufbau bei schneller Montagemöglichkeit besitzt.

Zur Lösung dieser Aufgabe sind bei einem derartigen Einsatz für einen Einfüllstutzen eines Harnstoffbehälters der genannten Art die im Anspruch 1 angegebenen Merkmale vorgesehen.

Durch die erfindungsgemäßen Maßnahmen ist erreicht, dass der Einsatz mit dem vor dem Einbau magnetisierten Permanentmagneten in schneller und einfacher Weise zusammengebaut werden kann, da keine beim Montagebetrieb notwendige Vorrichtung zum Magnetisieren vorhanden sein und verwendet werden muss. Des Weiteren sind durch das Verschweißen der beiden Kunststoffbauteile weitere Abdichtungen beispielsweise in Form von Ringdichtungen oder dergleichen nicht notwendig. Dies führt zu weiteren Vereinfachungen und Einsparungen.

Weitere Einzelheiten der Erfindung sind der folgenden Beschreibung zu entnehmen, in der die Erfindung anhand des in der Zeichnung dargestellten Ausführungsbeispieles näher beschrieben und erläutert ist. Es zeigen:
Figur 1 in auseinandergezogener perspektivischer Darstellung einen Einsatz für einen Einfüllstutzen eines Hamstoffbehälters gemäß einem bevorzugten Ausführungsbeispiel vorliegender Erfindung und
Figur 2 einen Längsschnitt durch den Einsatz nach Figur 1 in zusammengebautem Zustand.

Der in der Zeichnung dargestellte Einsatz 10 wird zum Befüllen eines nicht dargestellten Harnstoffbehälters in dessen Einfüllstutzen eingesetzt, so dass der Harnstoffbehälter mit Hilfe einer Zapfpistole für Harnstoff befüllt werden kann, ohne dass es zu einer Fehlbefüllung mit einem Kraftstoff führen kann.

Der Einsatz 10 besteht aus drei Teilen, nämlich aus zwei Kunststoffbauteilen 11 und 12 sowie einem Permanentmagneten 13.

Das eine Kunststoffbauteil 11 ist ein gestuft zylindrisches Aufnahmeelement, das in den nicht dargestellten Einfüllstutzen eingeklipst oder bajonettartig mittelbar eingebracht werden kann. Das Aufnahmeelement 11 ist außen- und innenumfangsseitig mehrfach gestuft und besitzt an seinem in Richtung des Pfeiles A vorderen Ende einen kronenartigen Teil 16 mit umfangsseitig verteilt angeordneten Vertiefungen 17, einen daran anschließenden gestuften Aufnahmebereich 18 sowie einen daran anschließenden durchmesserkleineren zylindrischen Bereich 19, der außenumfangsseitig mit einer Ringnut 21 versehen ist. Das Aufnahmeelement 11 ist einstückig ausgebildet.

Das zweite Kunststoffbauteil 12 bildet ein Innenführungselement, das einstückig aus einem Rohrteil 26, das axial verläuft, und einem senkrecht dazu horizontal verlaufenden und sich radial erstreckenden Ringrand 27, der außenumfangsseitig in Richtung des Pfeiles A axial und parallel zum Rohrteil 26 mit einer Bördelung 28 versehen ist, gebildet ist. Am Übergang vom Rohrteil 26 als axiale Begrenzungswand zum Ringrand 27 als radiale Überdeckungswand ist die umlaufende innere Kante 29 polygon oder gerundet ausgeführt. Der Innendurchmesser des Rohrteils 26 entspricht dem des zylindrischen Bereichs 19 des Aufnahmeelements 11.

Der Permanentmagnet 13, der beim Ausführungsbeispiel ringförmig ausgebildet ist, besteht aus einem magnetischen Material, wie NdFeB und wird vor der Montage des Einsatzes 10 magnetisiert. Der in magnetisiertem Zustand angelieferte Permanentmagnet wird zwischen die beiden Kunststoffbauteile 11 und 12 aufgenommen.

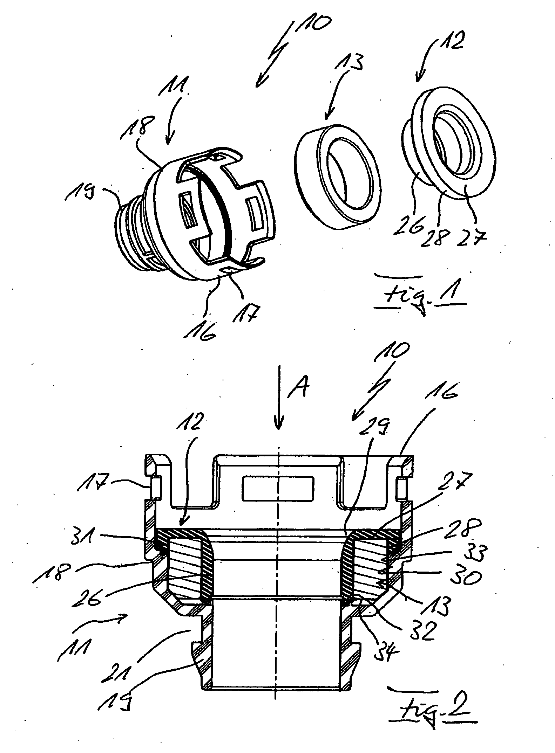

Gemäß Figur 2 ist das Innenführungselement 12 auf eine obere erste Stufenringfläche 31 und eine untere zweite Stufenringfläche 32 eines Rücksprungs 30 des Aufnahmeelements 11 mit seinem freien ringförmigen Ende der Bördelung 28 beziehungsweise mit dem unteren ringförmigen Ende des zylindrischen Bereichs 19 aufgesetzt. Dabei befindet sich der in magnetisiertem Zustand angelieferte Permanentmagnet 13 in einem Raum 33 zwischen Innenführungselement 12 und Aufnahmeelement 11. An einem in Richtung des Pfeiles A unteren Ende des Aufnahmeraumes 33, in dem der Permanentmagnet 13 zwischen den beiden Kunststoffbauteilen 11 und 12 aufgenommenen ist, verbleibt ein Luftraum 34, der vom Permanentmagneten 13 nicht ausgefüllt ist. Mit anderen Worten, die axiale Länge des Permanentmagneten 13 ist etwas kleiner als die axiale Abmessung des Aufnahmeraums 33 zwischen den beiden Kunststoffbauteilen 11 und 12. Ansonsten entspricht der Querschnitt des Permanentmagneten 13 den Querschnitt des Raumes 33 abzüglich des Luftraums 34.

In diesem Zustand werden die beiden Kunststoffbauteile 11 und 12 an ihren Auflageringflächen mittels Ultraschall gas- und flüssigkeitsdicht verschweißt. Nach dem Ultraschallverschweißen der beiden Kunststoffbauteile 11 und 12 verbleibt der Restraum 34 mit Luft gefüllt, über dessen Innendruck die Dichtheit der Ultraschallverschweißung überprüft werden kann.

## Patentansprüche

1. Einsatz (10) für einen Einfüllstutzen eines Harnstoffbehälters in dieselbetriebenen Kraftfahrzeugen, vorzugsweise Lastkraftwagen umfassend zwei vorzugsweise ineinandergreifende Kunststoffbauteile (11, 12), die zwischen sich ein vorzugsweise ringförmiges, aus magnetischem Material bestehendes und vor dem Einbau permanentmagnetisiertes Bauelement (13), aufnehmen, **dadurch gekennzeichnet, dass** die Kunststoffbauteile (11, 12) miteinander gas- und flüssigkeitsdicht verschweißt sind, dass zwischen den beiden Kunststoffbauteilen (11, 12) ein Aufnahmeraum (33) gebildet ist, dessen Volumen etwas größer als das Volumen des zu einem Permanentmagneten (13) magnetisierten Bauelementes ist, dass die beiden Kunststoffbauteile (11, 12) durch ein außen- und innenumfangsseitig gestuft ausgebildetes Aufnahmeelement (11) und ein einen Rücksprung (30) des Aufnahmeelements (11) überdeckendes ringförmiges Innenführungselement (12) gebildet sind, und dass das Innenführungselement (12) auf einer oberen ersten Stufenringfläche (31) und einer unteren zweiten Stufenringfläche (32) eines Rücksprungs (30) des Aufnahmeelements (11) aufgesetzt ist.

2. Einsatz nach Anspruch 1, **dadurch gekennzeichnet, dass** das Innenführungselement (12) auf zwei radial und axial beabstandete Stufenflächen (31, 32) des Aufnahmeelementes (11) aufliegt.

3. Einsatz nach Anspruch 1 oder 2, **dadurch gekennzeichnet, dass** das ringförmige Innenführungselement (12) an einer Innenkante (29) zwischen einer radialen Überdeckungswand (27) und einer axialen Begrenzungswand (26) gerundet ist.

4. Einsatz nach mindestens einem der vorhergehenden Ansprüche, **dadurch gekennzeichnet, dass** die beiden Kunststoffbauteile (11, 12) verschweißt sind, vorzugsweise mit Ultraschallschweißen.

5. Einsatz nach mindestens einem der vorhergehenden Ansprüche, **dadurch gekennzeichnet, dass** der Einsatz (10) vorzugsweise mittelbar in einen Einfüllstutzen einklipsbar oder bajonettartig einsetzbar ausgebildet ist.

## Claims

1. An insert (10) for a filler neck of an urea container in diesel-fueled motor vehicles, preferably trucks, comprising two preferably internested plastic components (11, 12), which between them receive a preferably annular component element (13) comprising magnetic material and permanently magnetized before being installed, **characterized in that** the plastic components (11, 12) are welded to one another in gas-tight and fluid-tight fashion, that between the two plastic components (11, 12) a receiving chamber (33) is formed, the volume of which is somewhat greater than the volume of the component element that is magnetized into a permanent magnet (13), that the two plastic components (11, 12) are formed by a receiving element (11) embodied in graduated fashion on the inner and outer circumference and by an annular inner guide element (12) that covers a setback (30) of the receiving element (11), and **in that** the inner guide element (12) is stacked up on an upper first graduated ring face (31) and a lower second graduated ring face (32) of the receiving element (11).

2. The insert according to claim 1, **characterized in that** the inner guide element (12) rests on two graduated ring faces (31, 32) that are radially and axially spaced apart.

3. The insert according to claim 1 or 2, **characterized in that** the annular inner guide element (12) is rounded at an inner edge (29) between a radial covering wall (27) and an axial boundary wall (26).

4. The insert according to at least one of the foregoing claims, **characterized in that** the two plastic components (11, 12) are welded, preferably by ultrasonic welding.

5. The insert according to at least one of the foregoing claims, **characterized in that** the insert (10) is embodied such that it can be indirectly clipped or inserted in bayonet-like fashion into a filler neck.

## Revendications

1. Insert (10) pour une tubulure de remplissage d'un réservoir d'urée dans des véhicules à moteur Diesel, de préférence des camions, comprenant deux pièces en matière plastique (11, 12), de préférence imbriquées l'une dans l'autre, lesquelles reçoivent entre elles une pièce (13) de préférence annulaire, constituée d'un matériau magnétique et aimantée en permanence avant son montage, **caractérisé en ce que** les pièces en matière plastique (11, 12) sont soudées l'une à l'autre de manière étanche aux gaz et aux liquides, **en ce qu'**un espace de réception (33), dont le volume est sensiblement supérieur au volume de la pièce magnétisée par rapport à un aimant permanent (13), est formé entre les deux pièces en matière plastique (11, 12), **en ce que** les deux pièces en matière plastique (11, 12) sont formées par un élément de réception (11) à conception étagée côté circonférence extérieure et côté circonférence intérieure et un élément de guidage intérieur (12) annulaire recouvrant un renfoncement (30) de l'élément de réception (11), et **en ce que** l'élément de guidage intérieur (12) est posé sur une première surface annulaire étagée supérieure (31) et une seconde surface annulaire étagée inférieure (32) d'un renfoncement (30) de l'élément de réception (11).

2. Insert selon la revendication 1, **caractérisé en ce que** l'élément de guidage intérieur (12) repose sur deux surfaces étagées (31, 32) espacées radialement et axialement de l'élément de réception (11).

3. Insert selon la revendication 1 ou 2, **caractérisé en ce que** l'élément de guidage intérieur annulaire (12) est arrondi au niveau d'une arête intérieure (29) entre une paroi radiale de recouvrement (27) et une paroi axiale de délimitation (26).

4. Insert selon l'une quelconque des revendications précédentes, **caractérisé en ce que** les deux pièces en matière plastique (11, 12) sont soudées, de préférence au moyen d'un soudage par ultrasons.

5. Insert selon l'une quelconque des revendications précédentes, **caractérisé en ce que** l'insert (10) est conçu de préférence de manière à pouvoir être clipsé indirectement dans une tubulure de remplissage ou inséré à la façon d'une baïonnette.
